# EUROPEAN PATENT SPECIFICATION

(11) **EP 4 585 802 B1**
(45) Date of publication and mention of the grant of the patent: **11.03.2026**
(21) Application number: 24151162.5
(22) Date of filing: 10.01.2024
(51) Int. Cl.: F03D 80/50, H02K 15/00

(54) **SERVICING OF A WIND TURBINE COMPONENT**
WARTUNG EINER WINDTURBINENKOMPONENTE
ENTRETIEN D'UN COMPOSANT D'ÉOLIENNE

(43) Date of publication of application: 16.07.2025
(73) Proprietor: Siemens Gamesa Renewable Energy A/S, 7330 Brande (DK)
(72) Inventor: Schult, Matthias, 7451 Sunds (DK); Toft, Anders Saaby, 8700 Horsens (DK)
(74) Representative: SGRE-Association

(56) References cited:
- EP-A1- 3 514 943
- EP-A1- 4 170 364
- EP-B1- 2 692 054
- EP-B1- 4 062 515

## Description

### FIELD OF THE INVENTION

The present invention relates to a method of servicing a wind turbine component of a wind turbine. It further relates to a computing device configured for servicing a wind turbine component and to a respective computer program.

### BACKGROUND

To increase energy production from renewable sources, a large number of wind turbines is being installed. In particular for wind turbines having a high output power, installation costs and manufacturing costs are relatively high. Further, such wind turbines need to be operated safely in order to avoid damage to the wind turbine and collateral damage. Several safety measures thus have to be taken, such as limiting remote access to wind turbines and ensuring that damage in a wind turbine component does not result in further damage.

For this reason, if a wind turbine component fails, the wind turbine component or the whole wind turbine is generally shut down. The failed wind turbine component is then replaced. In particular for offshore wind turbines, such replacement can generally occur only at dedicated times, besides being cost-intensive. As a consequence, power production from such wind turbine may be lost for significant periods of time. Further, wind turbine components such as a power converter are large and heavy and are generally costly to replace. Further, in view of the safety requirements, it is generally necessary to monitor such replacement and in particular to determine failure rates of respective wind turbine components.

It is desirable to reduce the cost end effort associated with repairing a failed wind turbine component. It is further desirable to improve the accuracy of the monitoring of failure rates of such wind turbine components. It is also desirable to provide a high degree of safety and data security when operating wind turbines.

EP4170364A1 is a relevant example of prior art.

### SUMMARY

Accordingly, there is a need to mitigate at least some of the drawbacks mentioned above. It is in particular desirable to reduce the cost and efforts required in case of a malfunctioning of a wind turbine component while maintaining operational security.

This need is met by the features of the independent claims. The dependent claims describe preferred embodiments.

According to an aspect of the invention, a method of servicing a wind turbine component of a wind turbine is provided. The wind turbine component is a main component that comprises a first subcomponent and one or more second subcomponents. The first subcomponent comprises a subcomponent memory storing component information, wherein the component information comprises information that is specific to the main component of the wind turbine. The method comprises reading out at least a portion of the subcomponent memory of a malfunctioning first subcomponent of the main component to obtain the component information of the malfunctioning first subcomponent. The subcomponent memory is read out over a dedicated communication link (in particular a dedicated local communication link) established to the malfunctioning first subcomponent. The dedicated communication link is dedicated to the purpose of obtaining the component information from the malfunctioning first subcomponent. Further, the method comprises writing at least a part of the component information (in particular the component information) to a subcomponent memory of a replacement subcomponent provided for replacing the malfunctioning first subcomponent. The component information is written over a communication link established to the replacement subcomponent. Such communication link may likewise be a dedicated communication link, in particular a dedicated local communication link.

Such method may avoid the need to replace the whole main component in case of damage of the first subcomponent. Information that might be required for the operation of the main component and that is stored in the subcomponent memory of the first subcomponent may thus be preserved and may be made available after exchanging the malfunctioning first subcomponent with the replacement subcomponent. Proper interoperability with the replacement subcomponent and a prevention of loss of information may thereby be ensured. Configuration of the main component after replacement may further be facilitated. Further, an estimation of a failure rate for a main component may be based on the component information. Accordingly, by the method, the determination of the failure rate may not be affected by replacing the subcomponent. This may avoid unnecessary replacements of the main component and may thus result in the conservation of resources, in particular of a still functioning main component, and may further result in reduced costs. Even further, by using a dedicated communication link for reading out the information from the subcomponent memory, it is not required to use communication connections that are employed for operating the wind turbine. It may thus not be necessary to interface with or modify the data communication performed by the wind turbine and in particular with the main component, so that security of operation may be preserved. Cyber security of the wind turbine may in particular not be compromised. The main component may thus be serviced in a safe, secure and cost-efficient way without wasting resources.

That the component information is specific to the main component may for example imply that the component information applies exactly to this individual main component, i.e. it may not be applicable to any other main component having a corresponding configuration. The main component may comprise more than one first subcomponent. In some embodiments, the first and second subcomponents may have a similar configuration or they may be different. Preferably, the main component comprises only one or two first subcomponents (e.g., a second first subcomponent may be provided for the purpose or redundancy). Preferably, the second subcomponents are different from the first subcomponent and may not comprise a subcomponent memory that stores the respective component information.

The dedicated communication link may be a link that is distinct from a communication link, in particular a communication connection, via which the first subcomponent communicates during operation. The dedicated communication link may for example be established only for the purpose to service the first subcomponent. It may be used for further data communication with the first subcomponent that may be related to servicing, such as testing, validation and/or calibration. The dedicated communication link may not be used during normal operation of the first subcomponent. A dedicated local communication link may be a communication link that is local to the installation site of the wind turbine component (such as a communication link via a dedicated cable or wireless connection of limited range), for example local the wind turbine, e.g. local to a nacelle of the wind turbine. It may in particular mean that it is not a communication link to a station remote from the wind turbine.

The method may comprise the steps of establishing the dedicated communication link and of establishing the communication link to the replacement subcomponent. The communication link to the replacement subcomponent may likewise be a dedicated communication link, which may have a similar configuration as the dedicated communication link to the first subcomponent. It may be dedicated to the purpose of writing the component information to its subcomponent memory and optionally of reading component information therefrom.

The method may be performed in the wind turbine, in particular at a location of the main component within the wind turbine. It may for example be performed within a nacelle of the wind turbine.

The replacement subcomponent may have a configuration that corresponds to (or is the same as) the configuration of the malfunctioning first subcomponent. A corresponding configuration may mean that it fulfills (substantially) the same functions, but may have differences that are commonly found between a device and a replacement device, such as differences between circuit boards that have been manufactured at different times or by different manufacturers, but fulfill the same function.

The component information may comprise information that is related to the operation of the main component in the wind turbine. For example, the component information, in particular the component information that is read out from the subcomponent memory of the first subcomponent and written to the subcomponent memory of the replacement subcomponent, may comprise one or a combination of: configuration data of the main component, such as one or more default settings of the main component; an identifier that identifies the main component, such as a serial number of the main component or any other type of identifier; calibration data of the main component; a checksum for detecting errors that may have been introduced during data transmission, data storage, and/or data manipulation; and validation information of the main component, such as testing information related to tests performed on the main component prior to installation and/or production information related to the production of the main component. Such information may be specific to the main component and may generally not be present on a replacement subcomponent. Accordingly, transferring such information from the malfunctioning first subcomponent to the replacement subcomponent may facilitate the servicing and may in particular ensure a smooth transition to operating the main component with the replacement subcomponent. Further, monitoring that is based on such component information may not be disturbed by the replacement of the first subcomponent.

The configuration data may for example comprise setup information that determines basic settings of the main component. Calibration data may for example include information on parameter settings that have been obtained during a calibration of the wind turbine component, e.g. during an initial calibration. Test information may for example include information on what has been tested and how it was tested, and respective results of the test (e.g. passed or not passed, or values of a parameter monitored during testing). Production information may comprise information on when the main component was produced, where it was produced, when it was installed, and the like. A checksum may for example ensure the data integrity of the component information. It may for example have been created for the remaining component information when the remaining component information was initially stored in the subcomponent memory; this may allow use of the checksum for detecting if data errors have occurred in the component information, which may facilitate safe and secure operation of the wind turbine component. The component information may in particular be considered to be root data of the main component.

Preferably, the component information comprises at least the identifier. Optionally it may further comprise the configuration data. Further optionally, it may additionally comprise the calibration data and/or the checksum. Preferably, it comprises all of the mentioned types of information. It should be clear that the component information may comprise further information not mentioned here.

In an embodiment, the method further comprises monitoring the component information of the main component and detecting a replacement of the main component by detecting a change of an identifier comprised in the component information, which identifier identifies the main component. Such identifier may be a serial number of the main component. Detected changes may for example be recorded. Accordingly, the number of exchanges of the main component can be tracked by such method. This may allow an identification of a failure rate of the main component. Further, by writing the component information to the replacement subcomponent, such tracking of the number of exchanges of the main component is not affected by an exchange of the first subcomponent. Correspondingly, the failure rate of the main component that may be determined based on the component information is not affected by an exchange of the first subcomponent. More precise failure rates and accordingly, lifetime estimation of the main component may thus be achieved. In particular, unnecessary exchanges of the main component may thereby be avoided, thus conserving energy, resources and reducing costs.

The monitoring may for example occur via a communication connection established via a communication interface of the main component. The communication connection is preferably physically different from the dedicated data communication link. The monitoring occurs preferably during normal operation of the wind turbine. The communication connection may for example be established by a wind turbine controller of the wind turbine. The data received from the monitoring may be evaluated by the wind turbine controller or by a remote processing device, such as by a wind farm controller, an operation center communicatively coupled to the wind turbine or the like. The communication interface of the main component may be provided by the first subcomponent, or may be provided by another subcomponent of the main component, such as by a particular data communication board.

The dedicated data communication link may be a dedicated physical data connection or a dedicated logical data connection. A dedicated physical data connection that is different from data connections of the first subcomponent used during normal operation is preferred.

For example, the dedicated data communication link may be established by connecting a physical data connector to the first subcomponent. A high level of data security may thereby be achieved, since a service technician needs to be present in person to establish the dedicated communication link, and it may not be possible to write the subcomponent memory and in particular the component information from a remote site. Also, such way of providing the dedicated communication link may not require any modifications or any addition of software programs to a wind turbine controller of the wind turbine. A high level of integrity and data security may thereby be retained.

The dedicated data communication link may comprise a data bus connection to a data bus of the first subcomponent. The communication link may for example be established to an Inter-Integrated Circuit (12C) bus, a Serial Peripheral Interface (SPI) bus, a System Management Bus (SMBus), a Controller Area Network (CAN) bus, or a Process Field Bus (Profibus). Other types of busses may certainly be employed. The communication link to the replacement subcomponent may be configured similarly. Establishing a connection to such bus of the subcomponent may facilitate the reading and writing of the component information from/to the subcomponent memory. Furthermore, it may not affect other components, such as controller or processor ICs, of the first subcomponent. Using a connection to such bus may further avoid the need to go through other communication interfaces of the first subcomponent, which may be protected and difficult to access.

In other embodiments, the communication link may be established in any other known way, such as via a different type of wired data connection or via a wireless data connection.

The main component may be a power converter of the wind turbine configured to convert electrical power generated by a generator of the wind turbine. It may operate as an inverter that adapts the properties of the generated electrical power, such as frequency, to the properties required by a power grid into which the power is fed. Such power converter may thus also be termed "inverter module", and plural such inverter modules may be coupled in parallel in a wind turbine power system.

For example, the wind turbine may comprise plural parallel power converters, each power converter constituting a main component. Each power converter may have a respective first subcomponent. Such parallel power converters may provide a parallel path via which electrical power can flow between the generator of the wind turbine and the power grid. The first subcomponent may not be related to the processing of electrical power by a main component.

The first subcomponent may for example be an interface board of the main component, such as an inverter interface board (IIB). Such interface board may provide a communication interface via which the main component, such as the power converter, can communicate with a superordinate controller, such as a wind turbine controller. Control commands may be received and monitoring data may be sent via such interface board during normal operation of the main component. The interface board may comprise a processing unit and may implement certain control functions of the main component.

The one or more second subcomponents may comprise a power conversion assembly of the main component. Such power conversion assembly may comprise semiconductor power electronic switches. The one or more second subcomponents may for example comprise one or more switching modules comprising power electronic switches, such as IGBT modules; a capacitor module comprising DC link capacitors; a brake chopper module comprising a brake chopper of a power converter, and other modules of a respective power converter. In other implementations, the main component may be different from a power converter and may correspondingly comprise different types of first and second subcomponents.

In an embodiment, writing the component information to the subcomponent memory of the replacement subcomponent comprises physically modifying a connection state of a circuit of the replacement subcomponent to enable a writing to the subcomponent memory of the replacement subcomponent via the communication link. Such physical modification may for example occur by using a bridge to provide an electrical connection between two points of the circuit, such as by means of a conductor, a wire, a pin or the like, or by physically actuating a switch provided on the subcomponent, such as a DIP switch, in order to enable writing to the subcomponent memory. Enable writing may comprise that a write protection of the subcomponent memory is disabled.

Additionally or alternatively, reading the component information from the subcomponent memory of the first subcomponent may comprise physically modifying a connection state of a circuit of the first subcomponent in a corresponding fashion. As the first subcomponent and the replacement subcomponent may have a similar configuration, reading and/or writing to the respective subcomponent memory of each subcomponent may thus require the providing of the physical modification of the connection state. For example, access to the subcomponent memory via a connector that provides the communication connection may only be enabled by the physical modification of the connection state.

The subcomponent memory of the first subcomponent and/or of the replacement subcomponent may be an EEPROM, a Flash-Memory, or any other type of re-writable non-volatile memory.

The communication link to the malfunctioning first subcomponent and/or to the replacement subcomponent may be established from a mobile computing device. The method may comprise at least temporarily storing the component information read out from the subcomponent memory of the malfunctioning first subcomponent in a memory of the mobile computing device. It may further comprise transferring the component information from the memory of the mobile computing device to the replacement subcomponent to write the component information to its subcomponent memory. Using such mobile computing device may facilitate bringing the mobile computing device to the location of the main component, for example into a nacelle of the wind turbine. Further, this allows establishing of the dedicated communication link in a safe and secure manner without compromising the data security of the wind turbine. The mobile computing device may for example be a portable computer, a laptop, a notebook, a tablet, a smartphone, a smartstick, or any other suitable mobile computer.

Establishing the data communication link to the malfunctioning first subcomponent and/or to the replacement subcomponent may comprise connecting a bus adapter to a data communication bus of the respective subcomponent. The bus adapter may be configured to provide an interface between the data communication bus of the respective subcomponent and a data communication bus of a mobile computing device to which the respective connection is established. For example, it may provide an interface to a universal serial bus (USB) of the mobile computing device. By means of such bus adapter, a conventional commercial computing device such as a laptop can be used to establish the connection to the bus of the subcomponent, such as to an I2C bus. The data communication bus of the mobile computing device may for example be a USB1, 2, 3, USB type-C, Thunderbolt, or any other commonly used communication bus.

To ensure data integrity, the method may further comprise performing a read test prior to reading the component information from the subcomponent memory of the malfunctioning first subcomponent and/or performing a write test prior to writing the component information to the replacement subcomponent. This may for example be performed to ensure that the established communication link and/or the subcomponent memory is intact. It may thus be ensured that the data that is being read and/or written is not corrupted. For example, if the read test or the write test fails, the communication link with the respective subcomponent may be re-established to ensure proper data communication.

At least part of the component information, preferably including at least one or a combination of an identifier, configuration data, calibration data, and/or validation information (as mentioned above), may not be modified after being read from the subcomponent memory of the malfunctioning first subcomponent and before being written to the subcomponent memory of the replacement subcomponent. This may exclude any checksum if comprised in the component information. This component information that is not modified may relate only to the actual data content, such as the above-mentioned examples of component information. This component information that is not modified may exclude the checksum (if provided) and/or other associated data, such as a CRC checksum and the like, which may certainly be modified prior to writing the component information to the subcomponent memory of the replacement subcomponent. This way, it may be ensured that data consistency is retained when replacing the first subcomponent so that the main component can continue to operate with the same component information.

The method may further comprise detecting a malfunction of the first subcomponent prior to establishing the dedicated data communication link. The malfunction may for example be detected from a remote location that is remote from the wind turbine via a communication connection to the wind turbine. Such communication connection may allow monitoring of the main component from the remote location; it may for example allow obtaining measurements of an operating parameter of the main component.

Detecting of the malfunction may for example comprise distinguishing between a failure of the first subcomponent and a failure of one or more of the second subcomponents. Such distinction may be made on the basis of a monitored operating parameter of the main component, for example of an operating voltage of the main component, for example an input voltage, an output voltage, an input current, an output current and/or a DC bus voltage of the power converter. When it is determined that a malfunction of the first subcomponent is present, e.g. by said remote monitoring, then the replacement of the first subcomponent may be performed in accordance with any of the embodiments and examples disclosed herein. Further, if it is detected that the first subcomponent is malfunctioning, e.g. a power converter, and the wind turbine comprises one or more further parallel main components, e.g. in form of further parallel power converters, the wind turbine may be controlled to seize operation of the main component including the malfunctioning first subcomponent (until replacement thereof) and to continue operation of the wind turbine with the remaining one or more parallel main components. Loss of power production by the wind turbine may thereby be reduced.

The main component, such as the power converter, may be installed in the wind turbine, in particular in a nacelle thereof. The method may further comprise removing the malfunctioning first subcomponent from the main component and installing the replacement subcomponent in the main component. The first subcomponent may for example be provided in form of a circuit board, and the circuit board may be removed from the main component and be replaced by a respective replacement board.

The removal preferably occurs prior to reading out the subcomponent memory of the malfunctioning first subcomponent, in particular prior to establishing the communication link thereto. The installation preferably occurs after establishing the data connection to the replacement subcomponent, in particular after writing the component information to the subcomponent memory of the replacement component. The reading and writing of the component information may thus occur on the dismounted first subcomponent and prior to installation of the replacement subcomponent. It does occur preferably within the wind turbine, thus facilitating and accelerating the service procedure. It should be clear that in other embodiments, the reading and/or writing of the component information may occur while the first subcomponent and/or the second subcomponent, respectively, is installed in the main component.

According to another aspect of the invention, a computing device configured for servicing a wind turbine component of a wind turbine is provided. The wind turbine component is a main component that comprises a first subcomponent and one or more second subcomponents. The first subcomponent comprises a subcomponent memory storing component information, wherein the component information comprises information that is specific to the main component of the wind turbine. The computing device comprises a processing unit and a memory, wherein the memory stores control instruction which, when executed by the processing unit, cause the computing device to perform any of the methods disclosed herein. The computing device may for example be a mobile computing device. The mobile computing device may have any of the above-described configurations. By such computing device, an efficient and secure servicing of the wind turbine component may be achieved. In particular, as the computing device reads the component information from the malfunctioning first subcomponent and writes the component information into the subcomponent memory of the replacement subcomponent, any of the above-outlined advantages may be achieved.

The computing device may comprise a communication adapter configured to establish the communication link between the computing device and the malfunctioning first subcomponent and/or the replacement subcomponent. Such communication adapter may be a bus adapter and may have any of the above-described configurations.

According to another aspect of the invention, a computer program for servicing a wind turbine component of a wind turbine is provided. The computer program comprises control instructions which, when executed by a processing unit of a computing device connectable via a data communication link to the first subcomponent, cause the processing unit to perform any of the methods described herein. The computer program may be provided on a volatile or non-volatile data carrier or storage medium and/or may be provided via a communication connection, such as a wired or wireless network connection. The computer program may be provided for installation on a mobile computing device, e.g. in form of an executable application or program.

It has to be noted that embodiments of the invention have been described with reference to different subject matters. In particular, some embodiments have been described with reference to method type subject matter, such as a method of servicing a wind turbine component of a wind turbine, whereas other embodiments have been described with reference to an apparatus type, such as a computing device configured for servicing a wind turbine component of a wind turbine, or such as a computer program for servicing a wind turbine component of a wind turbine. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

Furthermore, it is to be understood that the features mentioned above and those yet to be explained below can be used not only in the respective combinations indicated, but also in other combinations or in isolation, without leaving the scope of the present invention. In particular, the features of the different aspects and examples of the invention can be combined with each other unless noted to the contrary.

### BRIEF DESCRIPTION OF THE DRAWINGS

The forgoing and other features and advantages of the invention will become further apparent from the following detailed description read in conjunction with the accompanying drawings. In the drawings, like reference numerals refer to like elements.
Fig. 1 is a schematic drawing showing a wind turbine comprising a main component that includes plural subcomponents according to an embodiment of the invention.
Fig. 2 is a schematic drawing showing a first subcomponent and a replacement subcomponent as well as a mobile computing device according to an embodiment of the invention.
Fig. 3 is a flow diagram illustrating a method of servicing a main component of a wind turbine according to an embodiment of the invention.
Fig. 4 is a flow diagram illustrating a method of servicing a main component of a wind turbine that includes the method of Fig. 3 and further comprises the detection of a malfunctioning according to an embodiment of the invention.
Fig. 5 is a block diagram schematically illustrating component information monitored from different main components of a wind turbine according to an embodiment of the invention.

### DETAILED DESCRIPTION

In the following, embodiments and/or examples of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

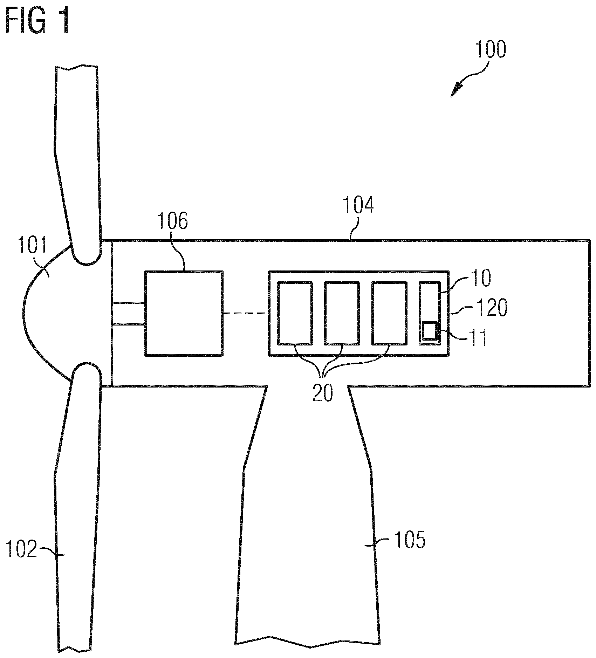

Fig. 1 schematically illustrates a wind turbine 100 having a wind turbine rotor 101 with rotor blades 102. Generator 106 is mechanically coupled to wind turbine rotor 101, e.g. directly (direct drive) or via an intervening gearbox. Wind turbine 100 comprises a wind turbine component 120 which in the present example is a power converter of the wind turbine. The power converter 120 converts electrical power received from generator 106 such that it is suitable to be fed into a power grid, such as a collector grid of a wind park or the utility grid (not shown). From a hierarchical point of view, the wind turbine component 120 constitutes a main component that comprises one or more first subcomponents 10 and one or more second subcomponents 20. First subcomponent 10 comprises a memory 11 that stores component information of the wind turbine component 120. Such component information preferably comprises an identifier, such as a serial number, of the main component 120 and further comprises optionally configuration data for main component 120 and validation information for main component 120.

The second subcomponents 20 may include modules related to the power conversion operation of the power converter. The power converter may comprise plural bridge circuits interconnected by an intermediate DC link. Second subcomponents 20 may comprise IGBT modules that implement respective bridge circuits, a subcomponent that implements the DC bus, a capacitor module that provides DC link capacitors, a brake chopper module and other subcomponents common to a power converter. As the power converter 120 provides inversion of electric power to the frequency of the power grid, it may also be termed "inverter module" (IM). Plural such power converters or inverter modules may be provided and may be coupled in parallel between the generator 106 and the power grid. Each of such parallel power converters may comprise a respective first subcomponent 10.

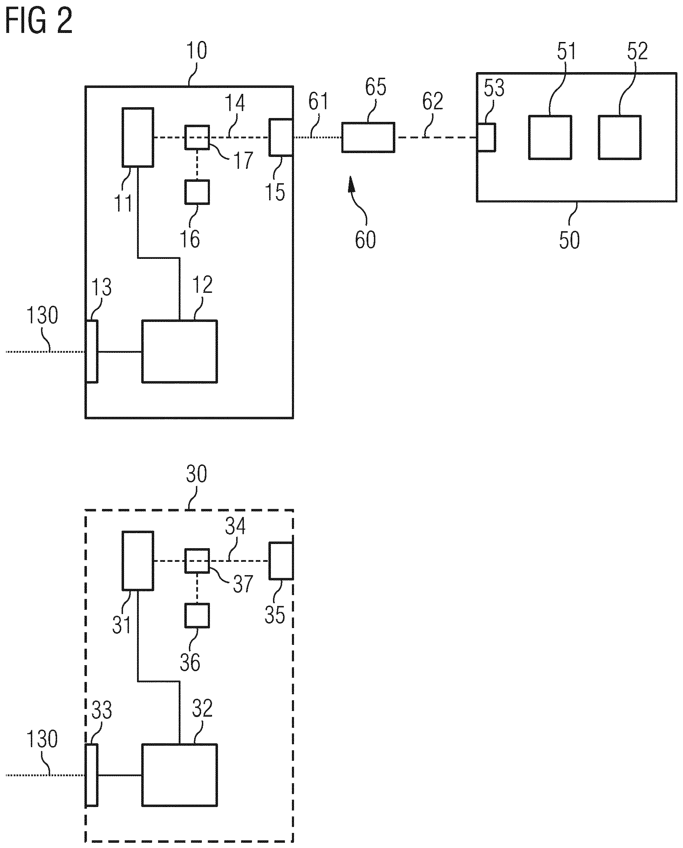

Although only one first subcomponent 10 is shown as being comprised in the main component 120, further respective first subcomponents may be provided in main component 120 in other embodiments. First subcomponent 10 is in the present example an interface board. Such interface board may for example comprise a communication connection 130 (Fig. 2) towards a superordinate controller, such as a wind turbine controller. It may further provide an interface to the further second subcomponents 20 of main component 120, e.g. for controlling or driving the respective subcomponents. The first subcomponent 10 may for example be an inverter interface board (IIB) of the power converter.

Conventionally, if a subcomponent of the power converter 120 fails, the whole power converter 120 may be replaced. If only the subcomponent 10 was replaced, then this would generally result in that it appears as if the whole power converter 120 had been replaced. An increased failure rate may thus be detected from which a reduced lifetime may be derived. Accordingly, power converter 120 may be replaced prematurely. In any of these examples, resources may be wasted and the replacement may be time-consuming and costly. Further, in view of the size and weight of the power converter 120, replacement may be difficult and a prolonged downtime of wind turbine 100 may result.

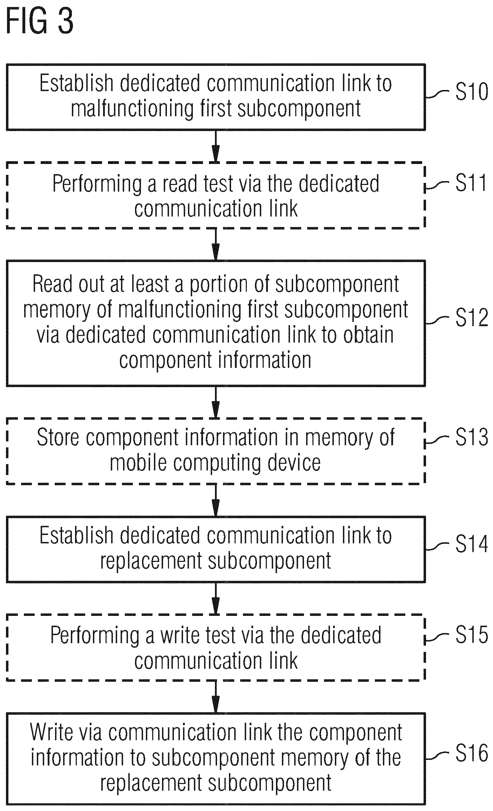

Fig. 2 illustrates a solution to mitigate at least some of these problems in accordance with an embodiment. A flow diagram of a corresponding method is illustrated in Fig. 3. First subcomponent 10 comprises the subcomponent memory 11 that stores the component information and may further comprise a processing unit 12 and a further communication interface 13. Via communication interface 13, a communication connection 130, e.g. to a wind turbine controller, may be established. Via communication interface 13, further communication connections, such as towards the second subcomponents 20, may be established. As the conventional functions of a inverter interface board are known in the art, no further explanations will be given here.

First subcomponent 10 further comprises a data communication bus 14, which may be used for communication between different circuits of the subcomponent 10. It may also be used for communicating with processing unit 12 and communication interface 13.

The first malfunctioning subcomponent 10 may be removed from the main component 120. In a first step S10 (Fig. 3), a dedicated communication link 60 may be established to the malfunctioning first subcomponent 10. The dedicated communication link 60 may be established to a mobile computing device 50. A service technician may for example bring the mobile computing device 50 into nacelle 104 and may establish the communication link 60 towards the removed first subcomponent 10. Via the dedicated communication link 60, the component information is read from subcomponent memory 11 by the mobile computing device 50 (step S12). Prior to performing the reading in step S12, a read test may optionally be performed via the dedicated communication link 60 (step S11). Such read test may ensure that the communication link is properly established and that it is possible to read data without corruption.

The component information may then be stored in a memory 52 of the mobile computing device 50 (step S13). The dedicated communication link 60 may now be disconnected.

Computing device 50 may comprise a processing unit 51 and the memory 52. Memory 52 may store control instructions which, when executed by processing unit 51, may cause the computing device 50 to perform any of the methods disclosed herein. Computing device 50 may in particular be caused to read the component information from the malfunctioning first subcomponent and to write the component information to a replacement subcomponent 30, and optionally to perform read and/or write tests. Processing unit 51 may comprise any kind of processor, such as a microprocessor, an application-specific integrated circuit, a field-programmable gate array, a digital signal processor, or a combination thereof. Memory 52 may comprise any kind of memory, such as RAM, ROM, EEPROM, Flash Memory, a hard-disk drive, or a combination thereof. Control system 50 may comprise further components common to a computer system, such as a respective input/output interface 53, a data communication bus for interconnecting the different components, and a user interface.

The replacement component 30 has a configuration that corresponds to the configuration of the first subcomponent 10. The replacement subcomponent 30 in particular includes a corresponding subcomponent memory 31, processing unit 32, communication interface 33, and data communication bus 34. The configuration of replacement subcomponent 30 may be substantially the same as that of the first subcomponent 10, with the common differences due to a different production update, a version update and the like. In step S14 (Fig. 3), a dedicated communication link corresponding to link 60 is established from the mobile computing device 50 to the replacement subcomponent 30. Via the dedicated communication link, the component information that has been stored in the memory 52 is written to the subcomponent memory 31 of the replacement subcomponent 30 (step S16). Optionally, prior to writing the component information in step S16, a write test may be performed in step S15 via the dedicated communication link. By means of such write test, it may be ensured that the data is properly transferred and written into the subcomponent memory 31, so that data corruption may be avoided.

Accordingly, component information that is substantially identical to the component information comprised in subcomponent memory 11 is thus stored in the subcomponent memory 31 of the replacement subcomponent 30. The replacement subcomponent 30 can thus, as a next step, be installed in the main component 120, and processes which assess the component information stored in the subcomponent memory 31 may assume that they still operate with the original main component 120. The component information may in particular be the root data of the main component 120, and this root data may thus be preserved. The main component 120 may thus continue operation with the same identifier and may further operate with the same factory default settings which may form part of the component information. Other data that may be comprised in the component information and that is specific to the main component 120 includes for example validation data, such as test data, manufacturing data and the like. The original information can thus be preserved and configuration of the main component 120 after replacing the first subcomponent 10 is facilitated.

The dedicated data connection 60 may be established via a connector part 15 of the data communication bus 14. In particular, a complementary connector part may be plugged into connector part 15 so that a bus connection 61 can be established. The bus 14 may for example be an I2C bus, and connection 61 may correspondingly be irrespective I2C bus connection. Mobile computing device 50 may have a bus interface 53, such as a serial bus interface, in particular a universal serial bus (USB) interface. Mobile computing device 50 may comprise a bus adapter 65 towards which a USB connection 62 is established. Bus adapter 65 may provide an interface between and a conversion between the I2C connection 61 and the USB connection 62. Accordingly, mobile computing device 50 is enabled to communicate via USB interface 53 with the I2C bus 14 of the first subcomponent 10.

The communication link 60 may in particular be provided as a physical connection by means of a cable. Establishing the communication link 60 in such way avoids the need to communicate via communication interface 13. Such communication may be restricted and may require access to and modification of a wind turbine controller, which may be a security risk. The cyber security and data safety of the wind turbine may thus be improved by using the dedicated communication link 60.

The first subcomponent 10 may further comprise a protection, such as a write protection, for the subcomponent memory 11 so that it cannot easily be overwritten via bus 14. For this purpose, a bridge or switch 16 may be provided in order to enable a writing to the subcomponent memory 11. By such switch or bridge, a connection state of a circuit of the first subcomponent 10 may be modified whereby the writing is enabled. For example, a bus controller 17 may control the access to memory 11 via bus 14, and the bus controller 17 may only grant access if detecting the presence of a respective bridge or a respective switching state. As an example, a conductor may need to be inserted into two sockets to provide such bridge connection, or a switch, such as a dip switch, may need to be actuated in order to allow the writing. This way, accidental overwriting of the memory 11 may be prevented. Further, a service technician needs to be physically present in order to overwrite the memory 11. Data security may thereby further be increased and consistency and non-corruption of the component information may be ensured. The replacement subcomponent 30 may be configured correspondingly by allowing the insertion of a respective bridge 36 or comprising a respective switch, and by comprising a respective bus controller 37. In other implementations, no such bus controller may be provided and the bridge or switch may simply close a bus section that is required for writing to the memory.

In consequence, a safe and secure way of replacing the first subcomponent 10 of the main component 120 which ensures consistency of the component information may be provided, while avoiding the need to replace the whole subcomponent 120 and while avoiding an incorrect determination of the failure rate of the main component 120.

Step S13 in Fig. 3 is optional, as the dedicated communication link 60 may also be established in a different way and the component information may be read out by a different entity other than a mobile computing device. As an example, the communication link may be established as dedicated logical communication link that is logically independent of the other communication connections and that may communicate with an interface provided in the nacelle 104 of the wind turbine 100.

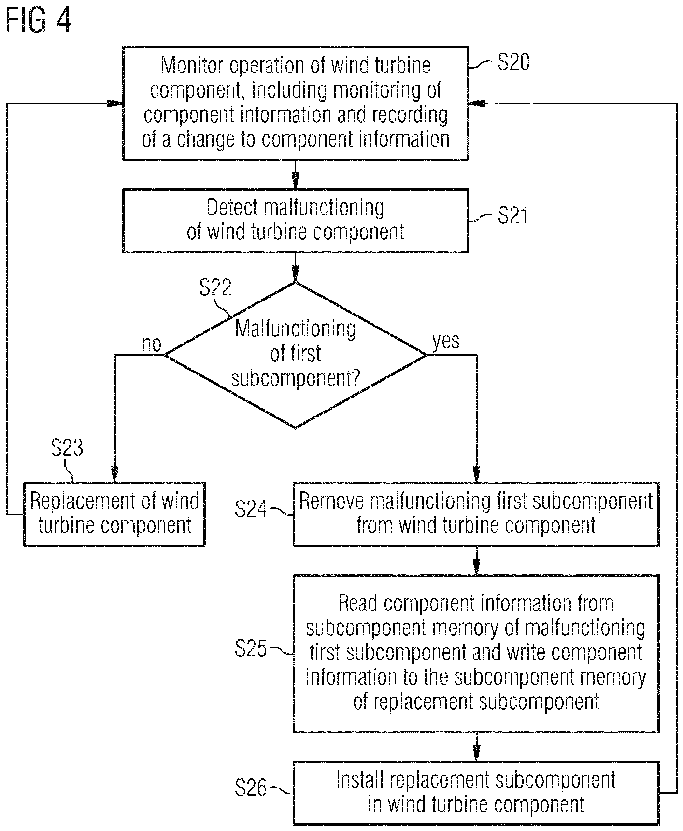

Fig. 4 is a flow-diagram that illustrates a method according to an embodiment, which employs the method of Fig. 3. In step S20, the operation of the wind turbine component 120 is monitored. This may include the monitoring of certain operating parameters, such as voltages of the wind turbine component (e.g., input voltage, output voltage, DC link voltage, or the like of the respective power converter). It may further comprise monitoring the component information which is stored in the subcomponent memory 11 of the first subcomponent 10. For example, the component identifier, such as the serial number, may be monitored. Further, changes to the component information, such as to the identifier, may be recorded in step S20.

In step S21, a malfunctioning of a wind turbine component is detected. Such malfunction may for example be detected by detecting a drop of a particular monitored operating parameter, such as a drop in one of the above-mentioned voltages. The monitoring and detection may for example be performed from a remote location. The component information may for example be monitored via the communication connection 130 to the respective first subcomponent 10.

In step S22, it is checked if the malfunction is due to a malfunctioning of the first subcomponent. This may be determined based on a characteristic of the monitored operating parameter of the main component 120, such as based on a shape of a voltage transient upon failure. If this is not the case in step S22, and if the malfunctioning for example rather originated from one of the second subcomponents 20, the power converter may be stopped. If the wind turbine comprises further parallel power converters, i.e. parallel main components, these may continue operation.

In step S23, the wind turbine component 120 may be replaced. This may include replacement of the whole wind turbine component 120 including the sub-modules 10, 20. Operation then continues and is again monitored in step S20.

If it is detected in step S22 that the malfunctioning is due to a malfunctioning of the first subcomponent 10, then the operation of the wind turbine component 120 may likewise be stopped. Again, if plural parallel power converters are present in the wind turbine 100, wind turbine operation may continue.

In step S24, the malfunctioning first subcomponent 10 is removed from the wind turbine component 120. A service technician may for example enter the nacelle 104 and may disassemble part of the main component 120 in order to remove the malfunctioning first subcomponent 10. The communication connection 130 may for example be disconnected, power supplies may be disconnected, and the subcomponent 10 may be unmounted.

In step S25, the component information is read from the subcomponent memory 11 of the malfunctioning first subcomponent 10 and the component information is written to the subcomponent memory 31 of the replacement subcomponent 30. This may be performed as described with respect to Fig. 3.

In step S26, the replacement subcomponent is installed in the wind turbine component 120. Accordingly, the wind turbine component 120 does not need to be uninstalled and can be retained; in particular, after the replacement, operation of wind turbine 100 can continue with the wind turbine component 120. The monitoring then continues with step S20. By such replacement, the component information is retained and the wind turbine component 120 can continue operation with the same component information.

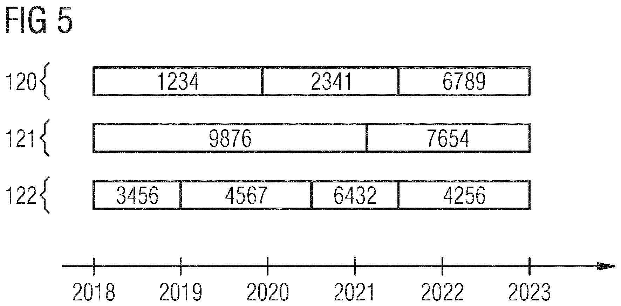

Fig. 5 illustrates an example how the failure rate of the wind turbine component 120 can be estimated. As mentioned above with respect to step S20 of the method of Fig. 4, the identifier comprised in the component information may be monitored for each of different main components. When the component information changes, i.e. due to an exchange of the main component 120, the corresponding change in the identifier is recorded. Fig. 5 illustrates the recording of such identifier over several years (2018 to 2023) for three different main components 120, 121, 122 of wind turbine 100, which may be inverter modules (IM) connected in parallel between the generator 106 and a power grid. Each inverter module may implement a fully functional power converter and may be operable by itself.

For the inverter module 120, three identifiers have been recorded. Accordingly, it can be assumed that the inverter module 120 was replaced twice, so that two failures requiring replacement have occurred over the time period. For inverter module 121, two identifiers have been recorded corresponding to one replacement of the inverter module, and for the inverter module 122, four identifiers have been recorded, thus indicating three replacements of the inverter module. Consequently, it becomes possible to calculate the failure rate and to estimate the lifetime of the respective inverter modules. If the first subcomponent 10 that stores the component information including the identifier in its subcomponent memory 11 is replaced without employing the method illustrated in Fig. 3, a new identifier will be recorded and it will appear as if the whole subcomponent 120 had been replaced. Consequently, the estimation of the failure rate and of the lifetime may be disturbed and may no longer reflect the actual failure rate or lifetime. By the method of Fig. 3, such disturbance may be avoided and accordingly, the estimation of the failure rate or remaining lifetime may become more accurate.

Besides conserving resources and energy by avoiding the exchange of the whole wind turbine component 120, the present solution thus provides improvements to the operational security of the wind turbine and further to the failure rate or lifetime estimation of the wind turbine component. Conventionally, respective subcomponents are addressed via the commonly available communication link. Although the present solution may require additional effort and may thus be counter-intuitive, the additional effort may be overcompensated by the advantages achieved. Several benefits for servicing the wind turbine are thereby provided.

While specific embodiments are disclosed herein, various changes and modifications can be made without departing from the scope of the invention. The present embodiments are to be considered in all respects as illustrative and non-restrictive, and all changes coming within the meaning of the appended claims are intended to be embraced therein.

## Claims

1. A method of servicing a wind turbine component of a wind turbine, wherein the wind turbine component is a main component (120) that comprises a first subcomponent (10) and one or more second subcomponents (20), wherein the first subcomponent (10) comprises a subcomponent memory (11) storing component information, wherein the component information comprises information that is specific to the main component (120) of the wind turbine (100), wherein the method comprises:
reading out at least a portion of the subcomponent memory (11) of a malfunctioning first subcomponent (10) of the main component (120) to obtain the component information of the malfunctioning first subcomponent (10),
wherein the subcomponent memory (11) is read out over a dedicated communication link (60) established to the malfunctioning first subcomponent (10), wherein the dedicated communication link (60) is dedicated to the purpose of obtaining the component information from the malfunctioning first subcomponent (10); and
writing at least a part of the component information to a subcomponent memory (31) of a replacement subcomponent (30) provided for replacing the malfunctioning first subcomponent (10), wherein the component information is written over a communication link established to the replacement subcomponent (30).

2. The method according to claim 1, wherein the component information comprises one or a combination of:
configuration data of the main component (120), in particular default settings of the main component (120);
an identifier that identifies the main component (120), in particular a serial number of the main component (120);
calibration data of the main component (120);
a checksum for detecting errors that may have been introduced during data transmission, data storage, and/or data manipulation; and
validation information of the main component (120), in particular testing information related to tests performed on the main component (120) prior to installation and/or production information on the production of the main component (120).

3. The method according to claim 1 or 2, further comprising monitoring the component information of the main component (120) and detecting a replacement of the main component (120) by detecting a change of an identifier that is comprised in the component information and that identifies the main component (120).

4. The method according to claim 3, wherein the monitoring occurs via a communication connection (130) established via a communication interface of the main component (120), the communication connection (130) being physically different from the dedicated communication link (60).

5. The method according to any of the preceding claims, wherein the dedicated communication link (60) is established by connecting a physical data connector to the first subcomponent (10).

6. The method according to any of the preceding claims, wherein the dedicated communication link (60) comprises a data bus connection (61) to a data bus (14) of the first subcomponent (10), in particular to an Inter-Integrated Circuit bus, a Serial Peripheral Interface bus, a System Management Bus, a Controller Area Network bus, or a Process Field Bus.

7. The method according to any of the preceding claims, wherein the main component (120) is a power converter of the wind turbine (100) configured to convert electrical power generated by a generator (106) of the wind turbine (100).

8. The method according to any of the preceding claims, wherein the first subcomponent (10) is an interface board of the main component (120), in particular an Inverter Interface Board, and/or wherein the one or more second subcomponents (20) comprise a power conversion assembly of the main component (120).

9. The method according to any of the preceding claims, wherein writing the component information to the subcomponent memory (31) of the replacement subcomponent (30) comprises physically modifying a connection state of a circuit of the replacement subcomponent to enable a writing to the subcomponent memory (31) of the replacement subcomponent (30) via the communication link (61).

10. The method according to any of the preceding claims, wherein the communication link (60) to the malfunctioning first subcomponent (10) and/or to the replacement subcomponent (30) is established from a mobile computing device (50), wherein the method comprises at least temporarily storing the component information read out from the subcomponent memory (11) of the malfunctioning first subcomponent (10) in a memory (52) of the mobile computing device (50), and transferring the component information from the memory (52) of the mobile computing device (50) to the replacement subcomponent (30) to write the component information to its subcomponent memory (31).

11. The method according to any of the preceding claims, wherein establishing the communication link (60) to the malfunctioning first subcomponent (10) and/or to the replacement subcomponent (30) comprises connecting a bus adapter (65) to a data communication bus (14) of the respective subcomponent (10, 30), wherein the bus adapter (65) is configured to provide an interface between the data communication bus (14) of the respective subcomponent (10, 30) and a data communication bus (53) of a mobile computing device (50) to which the respective connection is established, in particular to a universal serial bus of the mobile computing device (50).

12. The method according to any of the preceding claims, wherein the method further comprises detecting a malfunction of the first subcomponent (10) prior to establishing the dedicated communication link (60), wherein the malfunction is preferably detected from a remote location that is remote from the wind turbine (100) via a communication connection to the wind turbine (100).

13. The method according to any of the preceding claims, wherein the main component (120) is installed in the wind turbine (100), wherein the method further comprises removing the malfunctioning first subcomponent (10) from the main component (120) and installing the replacement subcomponent (30) in the main component (120) while the main component (120) is installed in the wind turbine (100).

14. A computing device configured for servicing a wind turbine component of a wind turbine (100), wherein the wind turbine component is a main component (120) that comprises a first subcomponent (10) and one or more second subcomponents (20), wherein the first subcomponent (10) comprises a subcomponent memory (11) storing component information, wherein the component information comprises information that is specific to the main component (120) of the wind turbine (100), wherein the computing device (50) comprises a processing unit (51) and a memory (52), wherein the memory (52) stores control instruction which, when executed by the processing unit (51), cause the computing device (50) to perform the method of any of the preceding claims.

15. A computer program for servicing a wind turbine component of a wind turbine, wherein the wind turbine component is a main component (120) that comprises a first subcomponent (10) and one or more second subcomponents (20), wherein the first subcomponent (10) comprises a subcomponent memory (11) storing component information, wherein the component information comprises information that is specific to the main component (120) of the wind turbine (100), wherein the computer program comprises control instructions which, when executed by a processing unit (51) of a computing device (50) that is connectable via a communication link (60) to the first subcomponent (10) and to a replacement subcomponent (30), cause the processing unit (51) to perform the method of any of claims 1-13.

## Patentansprüche

1. Verfahren zum Warten einer Windturbinenkomponente einer Windturbine, wobei die Windturbinenkomponente eine Hauptkomponente (120) ist, die eine erste Unterkomponente (10) und eine oder mehrere zweite Unterkomponenten (20) umfasst, wobei die erste Unterkomponente (10) einen Unterkomponentenspeicher (11) umfasst, der Komponenteninformationen speichert, wobei die Komponenteninformationen Informationen umfassen, die für die Hauptkomponente (120) der Windturbine (100) spezifisch sind, wobei das Verfahren Folgendes umfasst:
Auslesen mindestens eines Abschnitts des Unterkomponentenspeichers (11) einer fehlerhaft arbeitenden ersten Unterkomponente (10) der Hauptkomponente (120) dazu, die Komponenteninformationen der fehlerhaft arbeitenden ersten Unterkomponente (10) zu erlangen, wobei der Unterkomponentenspeicher (11) über eine dedizierte Kommunikationsverknüpfung (60), die mit der fehlerhaft arbeitenden ersten Unterkomponente (10) hergestellt ist, ausgelesen wird, wobei die dedizierte Kommunikationsverknüpfung (60) dem Zweck gewidmet ist, die Komponenteninformationen von der fehlerhaft arbeitenden ersten Unterkomponente (10) zu erlangen; und
Schreiben mindestens eines Teils der Komponenteninformationen in einen Unterkomponentenspeicher (31) einer Ersatzunterkomponente (30), die zum Ersetzen der fehlerhaft arbeitenden ersten Unterkomponente (10) bereitgestellt ist, wobei die Komponenteninformationen über eine Kommunikationsverknüpfung geschrieben werden, die mit der Ersatzunterkomponente (30) hergestellt ist.

2. Verfahren nach Anspruch 1, wobei die Komponenteninformationen eines oder eine Kombination aus Folgendem umfassen:
Konfigurationsdaten der Hauptkomponente (120), insbesondere Standardeinstellungen der Hauptkomponente (120);
eine Kennung, die die Hauptkomponente (120) identifiziert, insbesondere eine Seriennummer der Hauptkomponente (120);
Kalibrierungsdaten der Hauptkomponente (120);
eine Prüfsumme zum Erkennen von Fehlern, die während der Datenübertragung, Datenspeicherung und/oder Datenmanipulation eingeführt worden sein können; und
Validierungsinformationen der Hauptkomponente (120), insbesondere Testinformationen im Zusammenhang mit Tests, die an der Hauptkomponente (120) vor der Installation durchgeführt werden, und/oder Produktionsinformationen über die Produktion der Hauptkomponente (120).

3. Verfahren nach Anspruch 1 oder 2, ferner umfassend Überwachen der Komponenteninformationen der Hauptkomponente (120) und Erkennen eines Ersatzes der Hauptkomponente (120) durch Erkennen einer Änderung einer Kennung, die in den Komponenteninformationen umfasst ist und die die Hauptkomponente (120) identifiziert.

4. Verfahren nach Anspruch 3, wobei das Überwachen über eine Kommunikationsverbindung (130) erfolgt, die über eine Kommunikationsschnittstelle der Hauptkomponente (120) hergestellt ist, wobei sich die Kommunikationsverbindung (130) physisch von der dedizierten Kommunikationsverknüpfung (60) unterscheidet.

5. Verfahren nach einem der vorhergehenden Ansprüche, wobei die dedizierte Kommunikationsverknüpfung (60) durch Verbinden eines physischen Datenverbinders mit der ersten Unterkomponente (10) hergestellt wird.

6. Verfahren nach einem der vorhergehenden Ansprüche, wobei die dedizierte Kommunikationsverknüpfung (60) eine Datenbusverbindung (61) mit einem Datenbus (14) der ersten Unterkomponente (10) umfasst, insbesondere mit einem Inter-Integrated Circuit Bus, einem Serial Peripheral Interface Bus, einem System Management Bus, einem Controller Area Network Bus oder einem Process Field Bus.

7. Verfahren nach einem der vorhergehenden Ansprüche, wobei die Hauptkomponente (120) ein Leistungswandler der Windturbine (100) ist, der dazu konfiguriert ist, von einem Generator (106) der Windturbine (100) erzeugte elektrische Leistung umzuwandeln.

8. Verfahren nach einem der vorhergehenden Ansprüche, wobei die erste Unterkomponente (10) eine Schnittstellenkarte der Hauptkomponente (120), insbesondere eine Wechselrichter-Schnittstellenkarte, ist und/oder wobei die eine oder die mehreren zweiten Unterkomponenten (20) eine Leistungsumwandlungsbaugruppe der Hauptkomponente (120) umfassen.

9. Verfahren nach einem der vorhergehenden Ansprüche, wobei das Schreiben der Komponenteninformationen in den Unterkomponentenspeicher (31) der Ersatzunterkomponente (30) physisches Modifizieren eines Verbindungszustands einer Schaltung der Ersatzunterkomponente dazu umfasst, Schreiben in den Unterkomponentenspeicher (31) der Ersatzunterkomponente (30) über die Kommunikationsverknüpfung (61) zu ermöglichen.

10. Verfahren nach einem der vorhergehenden Ansprüche, wobei die Kommunikationsverknüpfung (60) mit der fehlerhaft arbeitenden ersten Unterkomponente (10) und/oder mit der Ersatzunterkomponente (30) von einer mobilen Rechenvorrichtung (50) hergestellt wird, wobei das Verfahren mindestens vorübergehendes Speichern der Komponenteninformationen, die aus dem Unterkomponentenspeicher (11) der fehlerhaft arbeitenden ersten Unterkomponente (10) ausgelesen werden, in einem Speicher (52) der mobilen Rechenvorrichtung (50) und Übertragen der Komponenteninformationen von dem Speicher (52) der mobilen Rechenvorrichtung (50) an die Ersatzunterkomponente (30) dazu umfasst, die Komponenteninformationen in ihren Unterkomponentenspeicher (31) zu schreiben.

11. Verfahren nach einem der vorhergehenden Ansprüche, wobei das Herstellen der Kommunikationsverknüpfung (60) mit der fehlerhaft arbeitenden ersten Unterkomponente (10) und/oder mit der Ersatzunterkomponente (30) Verbinden eines Busadapters (65) mit einem Datenkommunikationsbus (14) der jeweiligen Unterkomponente (10, 30) umfasst, wobei der Busadapter (65) dazu konfiguriert ist, eine Schnittstelle zwischen dem Datenkommunikationsbus (14) der jeweiligen Unterkomponente (10, 30) und einem Datenkommunikationsbus (53) einer mobilen Rechenvorrichtung (50), mit der die jeweilige Verbindung hergestellt ist, insbesondere mit einem universellen seriellen Bus der mobilen Rechenvorrichtung (50), bereitzustellen.

12. Verfahren nach einem der vorhergehenden Ansprüche, wobei das Verfahren ferner Erkennen einer Fehlfunktion der ersten Unterkomponente (10) vor dem Herstellen der dedizierten Kommunikationsverknüpfung (60) umfasst, wobei die Fehlfunktion vorzugsweise von einem entfernten Standort, der von der Windturbine (100) entfernt ist, über eine Kommunikationsverbindung mit der Windturbine (100) erkannt wird.

13. Verfahren nach einem der vorhergehenden Ansprüche, wobei die Hauptkomponente (120) in der Windturbine (100) installiert ist, wobei das Verfahren ferner Entfernen der fehlerhaft arbeitenden ersten Unterkomponente (10) aus der Hauptkomponente (120) und Installieren der Ersatzunterkomponente (30) in der Hauptkomponente (120), während die Hauptkomponente (120) in der Windturbine (100) installiert ist, umfasst.

14. Rechenvorrichtung, die zum Warten einer Windturbinenkomponente einer Windturbine (100) konfiguriert ist, wobei die Windturbinenkomponente eine Hauptkomponente (120) ist, die eine erste Unterkomponente (10) und eine oder mehrere zweite Unterkomponenten (20) umfasst, wobei die erste Unterkomponente (10) einen Unterkomponentenspeicher (11) umfasst, der Komponenteninformationen speichert, wobei die Komponenteninformationen Informationen umfassen, die für die Hauptkomponente (120) der Windturbine (100) spezifisch sind, wobei die Rechenvorrichtung (50) eine Verarbeitungseinheit (51) und einen Speicher (52) umfasst, wobei der Speicher (52) eine Steueranweisung speichert, die, wenn sie durch die Verarbeitungseinheit (51) ausgeführt wird, die Rechenvorrichtung (50) dazu veranlasst, das Verfahren nach einem der vorhergehenden Ansprüche durchzuführen.

15. Computerprogramm zum Warten einer Windturbinenkomponente einer Windturbine, wobei die Windturbinenkomponente eine Hauptkomponente (120) ist, die eine erste Unterkomponente (10) und eine oder mehrere zweite Unterkomponenten (20) umfasst, wobei die erste Unterkomponente (10) einen Unterkomponentenspeicher (11) umfasst, der Komponenteninformationen speichert, wobei die Komponenteninformationen Informationen umfassen, die für die Hauptkomponente (120) der Windturbine (100) spezifisch sind, wobei das Computerprogramm Steueranweisungen umfasst, die, wenn sie von einer Verarbeitungseinheit (51) einer Rechenvorrichtung (50), die über eine Kommunikationsverknüpfung (60) mit der ersten Unterkomponente (10) und mit einer Ersatzunterkomponente (30) verbindbar ist, ausgeführt werden, die Verarbeitungseinheit (51) dazu veranlassen, das Verfahren nach einem der Ansprüche 1-13 durchzuführen.

## Revendications

1. Procédé d'entretien d'un composant d'éolienne d'une éolienne, dans lequel le composant d'éolienne est un composant principal (120) qui comprend un premier sous-composant (10) et un ou plusieurs deuxièmes sous-composants (20), dans lequel le premier sous-composant (10) comprend une mémoire de sous-composant (11) stockant des informations de composant, dans lequel les informations de composant comprennent des informations qui sont spécifiques au composant principal (120) de l'éolienne (100), dans lequel le procédé comprend :
la lecture d'au moins une partie de la mémoire de sous-composant (11) d'un premier sous-composant défaillant (10) du composant principal (120) pour obtenir les informations de composant du premier sous-composant défaillant (10), dans lequel la mémoire de sous-composant (11) est lue sur une liaison de communication dédiée (60) établie avec le premier sous-composant défaillant (10), dans lequel la liaison de communication dédiée (60) est dédiée au but d'obtenir les informations de composant à partir du premier sous-composant défaillant (10) ; et
l'écriture d'au moins une partie des informations de composant dans une mémoire de sous-composant (31) d'un sous-composant de remplacement (30) prévue pour remplacer le premier sous-composant défaillant (10), dans lequel les informations de composant sont écrites sur une liaison de communication établie avec le sous-composant de remplacement (30).

2. Procédé selon la revendication 1, dans lequel les informations de composant comprennent une ou une combinaison des éléments suivants :
des données de configuration du composant principal (120), en particulier des réglages par défaut du composant principal (120) ;
un identifiant qui identifie le composant principal (120), en particulier un numéro de série du composant principal (120) ;
des données d'étalonnage du composant principal (120) ;
une somme de contrôle pour détecter des erreurs qui peuvent avoir été introduites pendant la transmission de données, le stockage de données et/ou la manipulation de données; et
des informations de validation du composant principal (120), en particulier des informations de test relatives à des tests effectués sur le composant principal (120) avant l'installation et/ou des informations de production sur la production du composant principal (120).

3. Procédé selon la revendication 1 ou 2, comprenant en outre la surveillance des informations de composant du composant principal (120) et la détection d'un remplacement du composant principal (120) par la détection d'un changement d'un identifiant qui est compris dans les informations de composant et qui identifie le composant principal (120).

4. Procédé selon la revendication 3, dans lequel la surveillance se produit via une connexion de communication (130) établie via une interface de communication du composant principal (120), la connexion de communication (130) étant physiquement différente de la liaison de communication dédiée (60).

5. Procédé selon l'une quelconque des revendications précédentes, dans lequel la liaison de communication dédiée (60) est établie en connectant un connecteur de données physiques au premier sous-composant (10).

6. Procédé selon l'une quelconque des revendications précédentes, dans lequel la liaison de communication dédiée (60) comprend une connexion de bus de données (61) à un bus de données (14) du premier sous-composant (10), en particulier à un bus de circuit inter-intégré, un bus d'interface périphérique série, un bus de gestion de système, un bus de réseau de zone de contrôleur ou un bus de champ de processus.

7. Procédé selon l'une quelconque des revendications précédentes, dans lequel le composant principal (120) est un convertisseur de puissance de l'éolienne (100) configuré pour convertir une puissance électrique générée par un générateur (106) de l'éolienne (100).

8. Procédé selon l'une quelconque des revendications précédentes, dans lequel le premier sous-composant (10) est une carte d'interface du composant principal (120), en particulier une carte d'interface d'inverseur, et/ou dans lequel les un ou plusieurs deuxièmes sous-composants (20) comprennent un ensemble de conversion de puissance du composant principal (120).

9. Procédé selon l'une quelconque des revendications précédentes, dans lequel l'écriture des informations de composant dans la mémoire de sous-composant (31) du sous-composant de remplacement (30) comprend la modification physique d'un état de connexion d'un circuit du sous-composant de remplacement pour permettre une écriture dans la mémoire de sous-composant (31) du sous-composant de remplacement (30) via la liaison de communication (61).

10. Procédé selon l'une quelconque des revendications précédentes, dans lequel la liaison de communication (60) au premier sous-composant défaillant (10) et/ou au sous-composant de remplacement (30) est établie à partir d'un dispositif informatique mobile (50), dans lequel le procédé comprend au moins le stockage temporaire des informations de composant lues à partir de la mémoire de sous-composant (11) du premier sous-composant défaillant (10) dans une mémoire (52) du dispositif informatique mobile (50), et le transfert des informations de composant de la mémoire (52) du dispositif informatique mobile (50) au sous-composant de remplacement (30) pour écrire les informations de composant dans sa mémoire de sous-composant (31).

11. Procédé selon l'une quelconque des revendications précédentes, dans lequel l'établissement de la liaison de communication (60) au premier sous-composant défaillant (10) et/ou au sous-composant de remplacement (30) comprend la connexion d'un adaptateur de bus (65) à un bus de communication de données (14) du sous-composant respectif (10, 30), dans lequel l'adaptateur de bus (65) est configuré pour fournir une interface entre le bus de communication de données (14) du sous-composant respectif (10, 30) et un bus de communication de données (53) d'un dispositif informatique mobile (50) auquel la connexion respective est établie, en particulier à un bus série universel du dispositif informatique mobile (50).

12. Procédé selon l'une quelconque des revendications précédentes, dans lequel le procédé comprend en outre la détection d'une défaillance du premier sous-composant (10) avant l'établissement de la liaison de communication dédiée (60), dans lequel la défaillance est de préférence détectée à partir d'un emplacement distant qui est distant de l'éolienne (100) via une connexion de communication à l'éolienne (100).

13. Procédé selon l'une quelconque des revendications précédentes, dans lequel le composant principal (120) est installé dans l'éolienne (100), dans lequel le procédé comprend en outre le retrait du premier sous-composant défaillant (10) du composant principal (120) et l'installation du sous-composant de remplacement (30) dans le composant principal (120) tandis que le composant principal (120) est installé dans l'éolienne (100).

14. Dispositif informatique configuré pour l'entretien d'un composant d'éolienne d'une éolienne (100), dans lequel le composant d'éolienne est un composant principal (120) qui comprend un premier sous-composant (10) et un ou plusieurs deuxièmes sous-composants (20), dans lequel le premier sous-composant (10) comprend une mémoire de sous-composant (11) stockant des informations de composant, dans lequel les informations de composant comprennent des informations qui sont spécifiques au composant principal (120) de l'éolienne (100), dans lequel le dispositif informatique (50) comprend une unité de traitement (51) et une mémoire (52), dans lequel la mémoire (52) stocke une instruction de commande qui, lorsqu'elle est exécutée par l'unité de traitement (51), amène le dispositif informatique (50) à réaliser le procédé selon l'une quelconque des revendications précédentes.

15. Programme informatique pour l'entretien d'un composant d'éolienne d'une éolienne, dans lequel le composant d'éolienne est un composant principal (120) qui comprend un premier sous-composant (10) et un ou plusieurs deuxièmes sous-composants (20), dans lequel le premier sous-composant (10) comprend une mémoire de sous-composant (11) stockant des informations de composant, dans lequel les informations de composant comprennent des informations qui sont spécifiques au composant principal (120) de l'éolienne (100), dans lequel le programme informatique comprend des instructions de commande qui, lorsqu'elles sont exécutées par une unité de traitement (51) d'un dispositif informatique (50) qui peut être connecté via une liaison de communication (60) au premier sous-composant (10) et à un sous-composant de remplacement (30), amènent l'unité de traitement (51) à réaliser le procédé selon l'une quelconque des revendications 1 à 13.
